# EUROPÄISCHE PATENTSCHRIFT

(11) **EP 0 428 089 B1**
(45) Veröffentlichungstag und Bekanntmachung des Hinweises auf die Patenterteilung: **22.01.1997**
(21) Anmeldenummer: 90121572.3
(22) Anmeldetag: 10.11.1990
(51) Int. Cl.: H04Q 11/04

(54) **Teilnehmeranschlussknoten eines digitalen Nachrichtenübertragungssystems**
Subscriber node of a digital data transmission system
Noeud d'abonné d'un système de transmission de données numérique

(30) Priorität: 13.11.1989 DE 3937738
(43) Veröffentlichungstag der Anmeldung: 22.05.1991
(73) Patentinhaber: Alcatel SEL Aktiengesellschaft, D-70435 Stuttgart (DE); ALCATEL N.V., NL-1077 XX Amsterdam (NL)
(72) Erfinder: Norz, Albert, W-7016 Gerlingen (DE); Schaffert, Albrecht, W-7016 Gerlingen (DE); Beisel, Werner, W-6472 Altenstadt (DE); Scechenyi, Kàlmàn, W-7151 Spiegelberg (DE)
(74) Vertreter: Pohl, Herbert, Dipl.-Ing

(56) Entgegenhaltungen:
- EP-A- 0 318 331
- EP-A- 0 378 122
- US-A- 3 812 294
- INTERNATIONAL SWITCHING SYMPOSIUM 1987, SESSION C7, PAPER 4 Bd. 3, 15. März 1987, Phoenix, US, Ss. 1-5; D.A. KAHN et al.: 'A Photonic Backplane for a High Capacity Time Switch'
- 1986 IEEE INT. SOLID-STATE CIRCUITS CONFERENCE, Februar 1986, Pennsylvania, US, SS. 124-126; T. NIKAIDO et al.: 'A 1.5 Mb/s x 128-Channel Time Switch LSI for Digital Still Pictures'
- MINI MICRO CONFERENCE RECORD, SESSION 6, PAPER 3, 1984, New York, US, SS. 1-13; A. UGGE: 'New Complex Functions for Modern Exchanges are Provided by Well-Proven VLSI Technologies'

## Beschreibung

Die Erfindung betrifft einen Teilnehmeranschlußknoten eines digitalen Nachrichtenübertragungssystems zur doppelt gerichteten übertragung von Nachrichtensignalen gemäß dem Oberbegriff von Anspruch 1.

Als Teilnehmeranschlußknoten ist diejenige Einheit eines digitalen Nachrichtenübertragungssystems zu sehen, in der die Nachrichtensignale, z.B. von einer Vermittlungsstelle her kommend, für die übertragungen zu den einzelnen Teilnehmerendgeräten unter Berücksichtigung des vorhandenen Netzwerkes aufbereitet werden. Dabei sind häufig auf der zu den Teilnehmerendgeräten gerichteten Seite des Teilnehmeranschlußknotens Anschlüsse vorhanden, in denen mehrere Anschlüsse einer Vermittlungsstelle zusammengefaßt sind. Werden nun in der Vorfeldeinrichtung weniger Kanäle benötigt als ihr zur Verfügung stehen, werden auf diese Art und Weise Kanäle in der Vermittlungsstelle belegt, die durch keinen Teilnehmer genutzt werden.

Aus der EP 0318331 Al ist ein optisches Nachrichtenübertragungssystem bekannt, bei dem die Nachrichtenübertragung zwischen Teilnehmeranschlußknoten und Teilnehmern durch ein TDM-Multiplexverfahren in Abwärtsrichtung, d. h. von der Vermittlungsstelle zu den Teilnehmern, und ein TDMA-Multiplexverfahren in Aufwärtsrichtung, d. h. von den Teilnehmern zu der Vermittlungsstelle, durchgeführt wird. Dabei werden die z. B. von den Teilnehmern herkommenden Zeitmulitplex-Digitalsignale in einem Teilnehmeranschlußknoten in anderweitig aufbereitete, an die Vermittlungsstelle gerichtete Zeitmulitplex-Digitalsignale umgewandelt. Diese Umwandlung erfolgt im Teilnehmeranschlußknoten. Die Nachrichtenübertragung zwischen Teilnehmeranschlußknoten und Vorfeldeinrichtung erfolgt dabei über Glasfasern. Ein zusätzliches Verteilen der Zeitmultiplexsignale erfolgt außerhalb des Teilnehmeranschlußknotens durch optische Koppler.

In dem Aufsatz "A Photonic Backplane For A High Capacity Time Switch" von D. A. Kahn et al, International Switching Symposium 1987, Session C7, Paper 4, Bd. 3, 15. März 1987, Phoenix, US, Seiten C7.4.1 bis C7.4.5 wird ein Vermittlungsknoten beschrieben, der eine N x N Schaltmatrix mit Datenspeichern aufweist, die PCM (Pulse Code Modulation) Rahmen von einem horizontalen Bus der Schaltmatrix lesen und entsprechend vorgegebener Adressen Zeitschlitze auf einem vertikalen Bus der Schaltmatrix schreiben kann.

Der Erfindung liegt nun die Aufgabe zugrunde, die Umwandlung von Zeitmultiplexsignalen und deren Verteilung technisch weniger aufwendig und flexibler zu realisieren.

Die Aufgabe wird durch die Merkmale des Anspruchs 1 gelöst.

Weitere Ausgestaltungen der Erfindung sind den übrigen Ansprüchen und dem Rest der Beschreibung zu entnehmen.

Ein besonderer Vorteil der Erfindung liegt darin, daß Zeitschlitze im Zeitmultiplexverfahren für einzelne Teilnehmerendgeräte zwischen den Teilnehmerendgeräten und den Vermittlungsstellen in beliebiger Zuordnung und Reihenfolge geschaltet werden können.

Ein Ausführungsbeispiel wird im folgenden in bezug auf die Figuren 1 bis 3 beschrieben. Es zeigen:
- Fig. 1: ein Blockschaltbild eines den erfindungsgemäßen Teilnehmeranschlußknoten enthaltenden optischen Nachrichtenübertragungssystems,
- Fig. 2: den für die Übertragung in Abwärtsrichtung zuständigen Zwischenspeicher, über den die Umwandlung des Zeitmultiplex-Digitalsignals und das Schalten der Verbindung abläuft, und
- Fig. 3: den für die Übertragung in Aufwärtsrichtung zuständigen Zwischenspeicher, über den die Umwandlung des Zeitmultiplex-Digitalsignals und das Schalten der Verbindung abläuft.

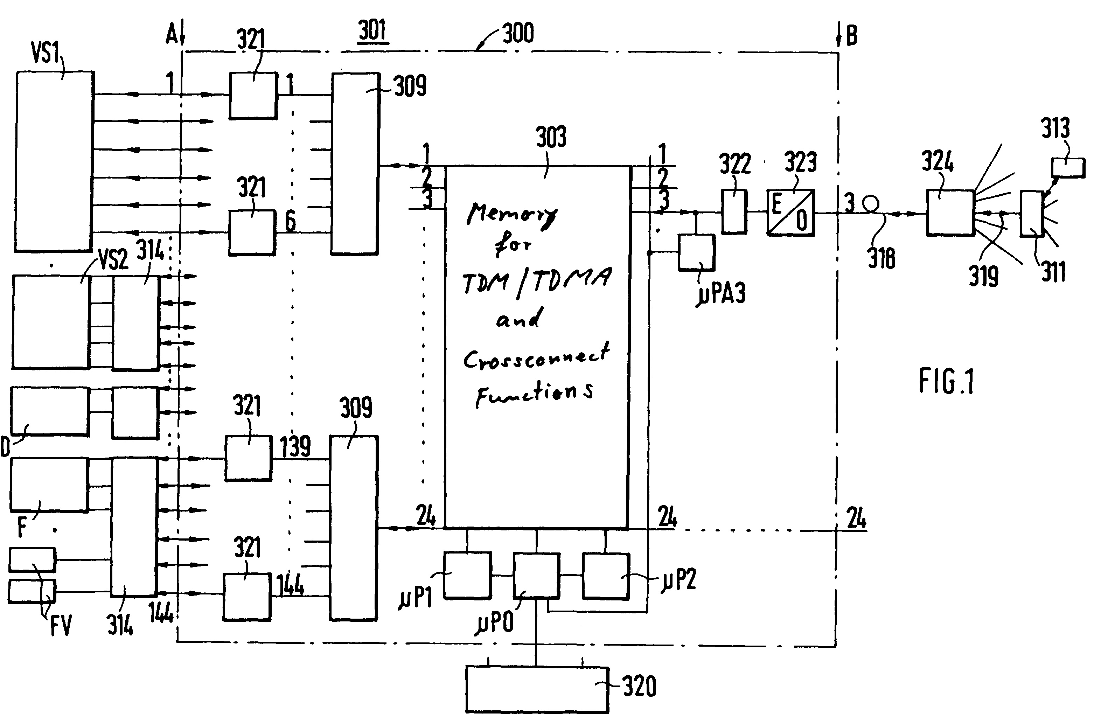

In Fig. 1 ist das Ausführungsbeispiel eines digitalen optischen Überragungssystems 301 mit dem erfindungsgemäßen Teilnehmeranschlußknoten 300 zu sehen. In der Bildmitte ist der Anschlußknoten 300 mit einer Strichpunktlinie eingerahmt. Auf der linken Seite befindet sich eine digitale Vermittlungsstelle VS1 mit Ausgängen und Eingängen für 2-MBit/s-Zeitmultiplexsignale, eine digitale Vermittlungsstelle VS2 mit anderen Ausgängen und Eingängen (an deren Stelle auch eine andere, eine analoge Vermittlungsstelle stehen könnte), ein Gerät D für eine Datexverbindung, ein Gerät F für eine Fernwirkverbindung und Geräte FV für Festverbindungen.

Die o. g. beispielhaft aufgezählten Geräte können auch in einer beliebig anderen Art zusammengestellt sein.

Die diesen Geräten zugewandten Anschlüsse des Anschlußknotens 300 bilden eine Schnittstelle A für digitale 2-MBit/s-Zeitmultiplexsignale mit einer Rahmendauer von 125 Mikrosekunden. Damit alle obengenannten Einrichtungen diese Schnittstellenbedingung erfüllen, ist es vorgesehen, daß zwischen der digitalen Vermittlungsstelle VS2, dem Datexgerät D, dem Gerät F und den Geräten FV, soweit es erforderlich ist, eine Adaptionsschaltung 314 angebracht ist, die die Übertragungs-Bitfolgefrequenz der Verbindungen auf die gewünschten 2 MBit/s adaptiert und gegebenenfalls, wenn analoge Signale vorliegen, eine Analog-Dialog-Wandlung vornimmt. Diese Adaptionsschaltungen 314 sind als solche bekannt.

Auf der rechten Seite ist stellvertretend für mehrere Vorfeldeinrichtungen eine Vorfeldeinrichtung 324 abgebildet. An diese sind mehrere Gemeinschaftsanschlüsse, von denen wiederum nur ein Gemeinschaftsanschluß 311 abgebildet ist, angeschlossen. Die Gemeinschaftsanschlüsse 311 sind über Lichtwellenleiter 319 mit der Vorfeldeinrichtung 324 verbunden. Jedem Gemeinschaftsanschluß 311 sind wiederum mehrere Teilnehmerendgeräte 313 zugeordnet. Jede Vorfeldeinrichtung 324 ist über einen Lichtwellenleiter 318 mit dem Anschlußknoten 300 verbunden. Die Übertragungs-Bitfolgefrequenz auf dem Lichtwellenleiter 318 beträgt netto 12 MBit/s. Dasselbe gilt für die nicht gezeigten Vorfeldeinrichtungen, die an den Anschlußknoten 300 angeschlossen sind, so daß die Anschlüsse der Vorfeldeinrichtungen eine Schnittstelle B des Anschlußknotens 300 mit einer einheitlichen Übertragungs-Bitfolgefrequenz bilden. Die über die Anschlüsse an der Schnittstelle B übertragenen Digitalsignale sind jeweils Zeitmultiplex-Signale mit einer Rahmentaktperiode von einer Millisekunde.

Der Anschlußknoten 300 hat somit zwei Arten von Anschlüssen: eine erste Art mit 144 elektrischen 2-MBit/s-Anschlüssen an der Schnittstelle A und eine zweite Art mit 24 optischen 12-MBit/s-Anschlüssen an der Schnittstelle B.

An den Anschlußknoten 300 wird die Anforderung gestellt, daß an den Anschlüssen 1 bis 144 der Schnittstelle A anliegende Signale zu den Anschlüssen 1 bis 24 der Schnittstelle B durchschaltbar sind. Dabei ist folgendes zu beachten: Die an den Anschlüssen 1 bis 144 eingehenden Signale sind jeweils Zeitmultiplex-Signale (TDM), die in Zeitmultiplex aus einer Anzahl von Teilsignalen zusammengesetzt sind. Entsprechendes gilt für die an der Schnittstelle B an den Anschlüssen 1 bis 24 erscheinenden Ausgangssignale. Dies gilt auch in umgekehrter Richtung. Im Ausführungsbeispiel werden in umgekehrter Richtung in die Anschlüsse 1 bis 24 der Schnittstelle B jeweils Signale eingegeben, die im Zeitmultiplex-Zugriffsverfahren (TDMA) zusammengesetzt sind. Der Anschlußknoten 300 hat nun die Aufgabe, aus den eingehenden Zeitmultiplex-Signalen neue Zeitmultiplex-Signale zu bilden, indem er irgendwelche Teilsignale der eingehenden Zeitmultiplex-Signale in beliebig steuerbarer Zusammenstellung und Reihenfolge zu einem neuen Zeitmultiplex-Signal zusammensetzt, und dieses an der jeweils gegenüberliegenden Schnittstelle an einem der dort vorhandenen Anschlüsse auszugeben.

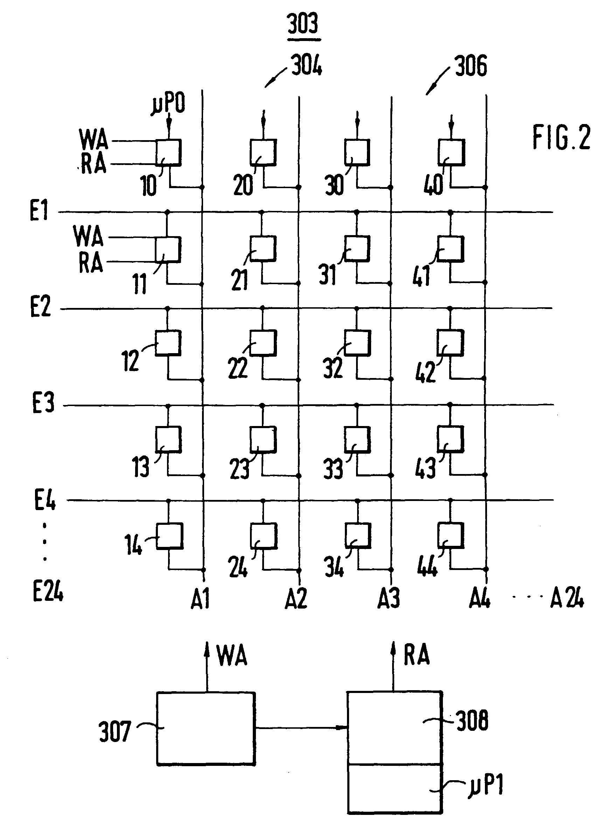

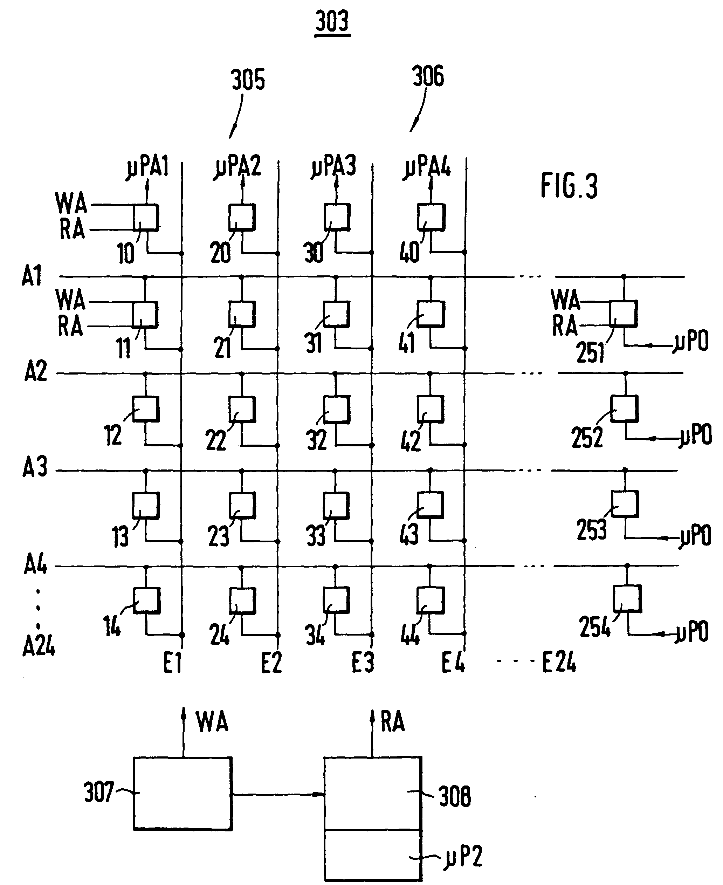

Die Anforderung wird durch die besondere Ausgestaltung von Zwischenspeichern 303, die aus einem ersten Zwischenspeicher 304 (Fig.2) und einem zweiten Zwischenspeicher 305 (Fig.3) bestehen, erfüllt. Um die Funktionsweise der Zwischenspeicher 303 leichter verständlich machen zu können, wird zunächst die Übertragung in Abwärtsrichtung unter Bezugnahme auf Fig. 2 erläutert.

Der erste Zwischenspeicher 304 besteht aus einer Anzahl von Teilspeichern 11, 21, 31, 41, ...; 12, 13, 14, ..., die matrixförmig in 24 Zeilen und 24 Spalten angeordnet sind. Er hat 24 Eingänge E1 bis E24 und 24 Ausgänge A1 bis A24. Die Eingänge der in jeweils einer Zeile liegenden Teilspeicher sind parallel mit einem der Eingänge E1 bis E24 verbunden, z.B. die Eingänge der Teilspeicher 11, 21, 31, 41, ... mit dem Eingang E1 des Zwischenspeichers. Von 24 Ausgängen A1 bis A24 ist jeweils einer mit den Ausgängen von in einer Spalte liegenden Teilspeichern verbunden, z.B. A2 mit den Ausgängen der Teilspeicher 21, 22, 23, 24, .... Außer dem Dateneingang und dem Datenausgang hat jeder Teilspeicher einen Eingang RA für Leseadressen und einen Eingang WA für Schreibadressen. Durch eine Zwischenspeicherung der Inhalte von an den Eingängen E1 bis E24 eingehenden Rahmen der Zeitmultiplexsignale, in anderen Worten der in diesen enthaltenen Teilsignale, wird die gewünschte Möglichkeit geschaffen, die Teilsignale innerhalb des Rahmens von der Schnittstelle B in einer anderen Reihenfolge weiter zu übertragen als in der Reihenfolge, in der sie an der Schnittstelle A in irgendwelchen Rahmen von dort eingehenden Zeitmultiplexsignalen auftreten. Alle Signale, d.h. Datenwörter oder Teilsignale eines z.B. am Eingang E1 anliegenden Rahmens, werden in jeden der 24 Teilspeicher 11, 21, 31, 41, ... eingeschrieben, wobei jedem Teilsignal ein eigener Speicherplatz (nicht abgebildet), der mit eigener Leseadresse RA und eigener Schreibadresse WA versehen ist, zugeordnet ist. Die einzelnen Speicherplätze (nicht abgebildet) sind als sogenannte fifo-Speicher (first in first out) ausgebildet, bei denen die zuerst eingeschriebenen Daten auch wieder als erste ausgelesen werden. Das Einschreiben und Auslesen der Daten im Zwischenspeicher 303 geschieht zeitgleich. Die Eingänge WA für die Schreibadresse sämtlicher Teilspeicher sind mit einem Zählwerk 307 verbunden. Die Eingänge RA für die Leseadressen sämtlicher Teilspeicher sind mit einem Tabellenspeicher 308 verbunden, der als Speicher eines Mikroprozessors µP1 realisiert und mit dem Zählwerk 307 verbunden ist. Das Auslesen der Teilspeicher erfolgt um eine Rahmentaktperiode verzögert gegenüber dem Einschreiben, da es vorkommt, daß ein in einem Rahmen hinten liegendes Teilsignal vor einem davorliegenden Teilsignal ausgelesen werden muß.

Im folgenden wird die Funktion des für die Abwärtsrichtung zuständigen ersten Zwischenspeichers 304 erläutert. An den Eingängen E1 bis E24 liegen die Rahmen der eingehenden Nachrichtensignale an. Jedes Teilsignal eines Rahmens wird in jeden Teilspeicher eingeschrieben, z.B. die Teilsignale eines an E1 eingehenden Rahmens in die Teilspeicher 11, 21, 31, 41, .... Die Präambeln der Rahmen werden nicht weiter verwendet. Jeder Teilspeicher hat eine der Anzahl der Zeitschlitze eines Rahmens, d.h. Teilsignale eines Rahmens, entsprechende Anzahl von adressierbaren Speicherplätzen. Die Speicherkapazität eines Speicherplatzes beträgt 8 Bits, da jedes der in einem Rahmen enthaltenen Teilsignale ein Datenwort aus 8 Bits ist. Schreibadressen-Eingänge WA sämtlicher Teilspeicher 11, ..., 12, ..., 13, ..., 14, ... sind mit dem Zählwerk 307 verbunden, dessen Taktperiode gleich der Länge eines Zeitschlitzes des Rahmens ist. Die Leseadressen-Eingänge RA sämtlicher Teilspeicher sind mit dem Tabellenspeicher 308 verbunden, der mit dem Mikroprozessor µP1 verbunden ist. Das Zählwerk 307 bestimmt den Takt, in dem der Tabellenspeicher 308 die Leseadressen ausgibt.

Mit Hilfe des Mikroprozessors µP1, des Tabellenspeichers 308 und des Zählwerks 307 ist es möglich, von jedem der 24 Eingangssignale irgend ein Teilsignal zu jedem der Ausgänge A1 bis A24 auszulesen, und dies in beliebiger Reihenfolge. Voraussetzung dafür ist durch den beschriebenen Speicheraufbau geschaffen, der dafür sorgt, daß jeder Ausgang des Speichers mit Ausgängen von Teilspeichern verbunden ist, die die Teilsignale aller an den Eingängen E1 bis E24 empfangenen Rahmen speichern, so daß jeder Ausgang zum gesamten Inhalt aller empfangenen Rahmen Zugriff hat.

Um die an einem Ausgang ausgehenden Teilsignale zu einem Rahmen zusammenzufassen, ist mit jedem Ausgang A1 bis A24 der Ausgang eines weiteren Teilspeichers 10, 20, 30, 40, ... verbunden, der mehrere adressierbare Speicherplätze enthält und wie die anderen Teilspeicher 11, 12, 13, 14, ... einen mit dem Zählwerk 307 verbundenen Schreibadressen-Eingang WA und einen mit dem Speicher 308 verbundenen Leseadressen-Eingang RA hat und seine Daten zur Bildung der Präambeln aus einem Mikroprozessor µP0 erhält.

In Fig. 3 ist der für die Nachrichtenübertragung in Aufwärtsrichtung zuständige zweite Zwischenspeicher 305 abgebildet. Er hat, wie der erste Zwischenspeicher 304, 24 Signaleingänge E1 bis E24 und 24 Signalausgänge A1 bis A24, die jeweils mit 24 in einer Spalte bzw. Zeile befindlichen, matrixförmig angeordneten Teilspeichern parallel verbunden sind. Die Eingänge E1 bis E24 sind mit den Eingängen der Teilspeicher und die Ausgänge A1 bis A24 mit den Ausgängen der Teilspeicher verbunden. Die Funktionsweise der die matrixförmige Anordnung bildenden Teilspeicher entspricht der aus der Beschreibung des ersten Teils 304 (Fig. 2). Der wesentliche Unterschied liegt in der Anordnung der zusätzlichen Teilspeicher 10, 20, 30, 40, deren Eingänge jeweils mit den Eingängen El bis E24 verbunden sind. Die zusätzlichen Teilspeicher 10, 20, 30, 40, ... sind bei dem Zwischenspeicher 305 zur Aufnahme der Präambeln von den Eingängen E1 bis E24 und zur Weiterleitung der Präambeln jeweils an einen mit ihrem Ausgang verbundenen Mikroprozessor µPA1, µPA2, ... angeschlossen.

über diese Mikroprozessoren µPA1, µPA2 ... in Verbindung mit einem zentralen Mikroprozessor µP0 (Fig. 1) erfolgt die Auswertung des empfangenen TDMA-Rahmens und der empfangenen TDMA-Präambel und die Bildung des TDM-Rahmens und der TDM-Präambel für die weitere übertragung in Aufwärtsrichtung. Die Rahmen der TDM-Signale, die vom Anschlußknoten 300 in Aufwärtsrichtung übertragen werden sollen, werden mit Hilfe von Teilspeichern 251, 252, 253, 254, ... gebildet, deren Ausgänge mit den Ausgängen Al bis A24 des Zwischenspeichers 305 und deren Eingänge mit dem zentralen Mikroprozessor µP0 verbunden sind.

Das Zusammenwirken der einzelnen Mikroprozessoren µP0, µP1, µP2, µPA1, µPA2, ... in Verbindung mit einer das gesamte digitale Nachrichtenübertragungssystem steuernden Einheit, die hier als Netzwerkmanagement 320 bezeichnet wird, wird im folgenden dargestellt. Es sei unterstellt, daß das Netzwerkmanagement 320 die günstigsten Verbindungsmöglichkeiten zwischen den Anschlüssen der Schnittstelle A und denen der Schnittstelle B aufgrund seiner Information über die Belegung der Anschlüsse 1 bis 144 der Schnittstelle A, die Belegung der damit verbundenen Einrichtungen VS1, VS2, D, F und FV, die Belegung der Anschlüsse 1 bis 24 der Schnittstelle B, die Belegung der damit verbundenen Vorfeldeinrichtungen 324, die Art und Anzahl der daran angeschlossenen Gemeinschaftsanschlüsse 311 und deren Belegung kennt. Aufgrund dieser Information ist das Netzwerkmanagement 320 in der Lage, die günstigste Verbindung zwischen den Anschlüssen 1 bis 144 der Schnittstelle A und den Anschlüssen 1 bis 24 der Schnittstelle B zu ermitteln, wobei es bemüht ist, die Anschlüsse 1 bis 144 der Schnittstelle A möglichst voll zu belegen, was besonders dann erforderlich ist, wenn einzelne Anschlüsse 1 bis 24 an der Schnittstelle B nicht voll belegt sind. Dies kann dann eintreten, wenn eine Vorfeldeinrichtung 324 in einem dünn besiedelten Gebiet mit nur wenigen Teilnehmern eingerichtet ist.

Die günstigste Verbindung teilt das Netzwerkmanagement 320 über den Mikroprozessor µP0 dem Mikroprozessor µP1 für die Übertragung in Abwärtsrichtung und dem Mikroprozessor µP2 für die Übertragung in Aufwärtsrichtung mit. Die Übertragungswege in Aufwärts- und Abwärtsrichtung müssen nicht, können aber die gleichen sein.

Dem Netzwerkmanagement 320 ist auch die Position der Zeitschlitze für einen Teilnehmer im Rahmen bei der Übertragung in Auf- und Abwärtsrichtung an beiden Schnittstellen A und B bekannt, entsprechend teilt es den Mikroprozessoren µP1 und µP2 über den Mikroprozessor µP0 mit, in welcher Reihenfolge Teilsignale für die Bildung des entsprechenden Rahmens aus dem Zwischenspeicher ausgelesen werden müssen.

Dem Netzwerkmanagement 320 sind auch die Strukturen der einzelnen Rahmen bekannt. Es teilt dem Mikroprozessor µP0 mit, welche Struktur der in Aufwärtsrichtung zu übertragende Rahmen an der Schnittstelle B hat. Ebenso teilt es dem Mikroprozessor µP1 mit, welche Struktur der in Abwärtsrichtung zu übertragende Rahmen an der Schnittstelle A hat. Die Mikroprozessoren µPA1, µPA2, ... erhalten ihre Information jeweils aus der Präambel der an der Schnittstelle B in Aufwärtsrichtung eingehenden Nachrichtensignale, die z.B. Informationen über den Zugriff eines neuen Teilnehmers enthalten können. Die Mikroprozessoren µPA1, µPA2, ... teilen ihre Information dem zentralen Mikroprozessor µP0 mit, der diese Information in die Bildung der Präambel der einzelnen Rahmen mit einbezieht und sie gegebenenfalls auch, z.B. wenn ein Teilnehmer hinzukommt oder wegfällt, dem Netzwerkmanagement 320 mitteilt.

Die Schnittstelle A des Teilnehmeranschlußknotens 300 hat 144 elektrische Anschlüsse mit einer Übertragungs-Bitfolgefrequenz von 2 MBit/s, die Schnittstelle B dagegen 24 optische Anschlüsse mit einer Übertragungs-Bitfolgefrequenz von 12 MBit/s. Die Anpassung erfolgt zum einen über Multiplexer/Demultiplexer 309, die jeweils sechs Anschlüsse mit einer Übertragungs-Bitfolgefrequenz von 2 MBit/s zu einem Anschluß mit einer Übertragungs-Bitfolgefrequenz von 12 MBit/s zusammenfassen. Jeder der 12-MBit/s-Anschlüsse eines Multiplexers/Demultiplexers ist mit einem der Eingänge E1 bis E24 des ersten Zwischenspeichers 304 bzw. mit einem der Ausgänge A1 bis A24 des zweiten Zwischenspeichers 305 verbunden. Zwischen jeweils einem der Anschlüsse der Schnittstelle A und dem Multiplexer 309 ist eine Coder-/Decodereinrichtung 321, die z.B. HDB3-codierte Signale einer Vermittlungsstelle in binäre Signale oder umgekehrt umwandelt. Die Schnittstelle A entspricht der Schnittstelle G.703 der CCITT-Empfehlungen. Die Empfehlung gibt als Übertragungs-Bitfolgefrequenz ein ganzzahliges Vielfaches von 64 kBit/s an.

Die Eingänge E1 bis E24 des zweiten Zwischenspeichers 305 und die Ausgänge A1 bis A24 des ersten Zwiwschenspeichers 304 sind jeweils mit einem Multiplexer/Demultiplexer 322 verbunden, der die "Netto"-Übertragungs-Bitfolgefrequenz von 12 MBit/s in eine höhere Übertragungs-Bitfolgefrequenz bzw. eine niedrigere Übertragungs-Bitfolgefrequenz umwandelt, da die effektive Übertragungs-Bitfolgefrequenz zwischen dem Anschlußknoten 300 und den Gemeinschaftsanschlüssen 311 aufgrund der mit dem TDM/TDMA-System verbundenen Schutzzeiten zwischen den Datenbündeln und der Art des hier verwendeten Übertragungsverfahren, bei dem periodisch abwechselnd in Abwärts- und Aufwärtsrichtung übertragen wird, höher als 12 MBit/s ist und ungefähr bei 30 MBit/s liegt. Zwischen den Multiplexern/Demultiplexern 322 und den optischen Anschlüssen 1 bis 24 der Schnittstelle B sind Elektrisch-Optisch-Wandler 323 angeordnet.

Jeder Anschluß zwischen den Zwischenspeichern 303 und einem Multiplexer 322 ist mit einem der Mikroprozessoren µPA1, µPA2, ... verbunden. Die Mikroprozessoren µPA1, µPA2, ... sind parallel mit dem zentralen Mikroprozessor µP0 verbunden. Der Mikroprozessor µP0 ist, wie schon oben beschrieben, mit den Zwischenspeichern 303, den Mikroprozessoren uP1 und uP2 und dem Netzwerkmanagement 320 verbunden.

Der erfindungsgemäße Anschlußknoten 300 ist in leicht abgewandelter Art nicht nur für ein Nachrichtenübertragungssystem 301 sondern, wenn anstelle der Elektrisch-Optisch-Wandler 323 eine Sende- und Empfangseinrichtung eines Richtfunk- oder Satellitenübertragungssystems angeordnet ist und auf der Teilnehmerseite entsprechende Basiseinheiten und Relaisstationen bzw. Satelliten vorhanden sind, auch für solche Nachrichtenübertragungssysteme anwendbar. Ferner können die Nachrichtensignale zwischen den Anschlußknoten und den Teilnehmern über elektrische Leitungen übertragen werden.

Die Erfindung kann auch in Anschlußknoten verwendet werden, bei denen zwischen den beiden Schnittstellen A und B keine Umwandlung der Übertragungs-Bitfolgefrequenz, oder keine Elektrisch-Optisch-Umwandlung vorliegt.

Da beim Ausführungsbeispiel die Nachrichtenübertragung periodisch abwechselnd in den beiden Richtungen auf einem optischen Träger stattfindet, kann zusätzlich ein über eine Faserankopplung an den Lichtwellenleiter 318 angekoppeltes Breitbandsignal zu den Teilnehmern 313 übertragen werden.

An der Schnittstelle A des Anschlußknotens 300 muß nicht zwangsweise ein Signal mit einer Übertragungs-Bitfolgefrequenz von 2 MBit/s oder 1,5 MBit/s (SONET) anliegen, es kann auch ein Nachrichtensignal mit einer höheren Übertragungs-Bitfolgefrequenz, z.B. ein Breitbandsignal mit einer Übertragungs-Bitfolgefrequenz von 140 MBit/s anliegen.

Funktionen, wie Überwachungs- und Steuerfunktion eines Nachrichtenübertragungssystemes, sind allgemein bekannt und werden deswegen nicht näher erläutert. Sie können, wie die Funktionsweise eines TDM/TDMA-Systems z.B. der Schrift EP 0318331 A1 entnommen werden. Anstelle des TDM/TDMA-Systems können auch andere Zeitmultiplexsysteme, wie z.B. ein bidirektionales TDM-System, verwendet werden.

## Patentansprüche

1. Teilnehmeranschlußknoten eines digitalen Nachrichtenübertragungssystems zur bidirektionalen Übertragung von Zeitmultiplex-Digitalsignalen zwischen ersten Einrichtungen, insbesondere Vermittlungsstellen, und zweiten Einrichtungen, insbesondere Vorfeldeinrichtungen,
- in dem eine erste Art Anschlüsse eine erste bidirektionale Schnittstelle für Zeitmultiplex-Digitalsignale einer vorgegebenen Übertragungs-Bitfolgefrequenz bilden,
- in dem eine zweite Art Anschlüsse eine zweite bidirektionale Schnittstelle für Zeitmultiplex-Digitalsignale einer vorgegebenen Übertragungs-Bitfolgefrequenz bilden,
- in dem Multiplexer/Demultiplexer angeordnet sind,
**dadurch gekennzeichnet**, daß
- er einen Zwischenspeicher (303) aufweist, mit dem Kanäle von an beliebigen Anschlüssen der ersten Art Anschlüsse eingehenden Zeitmultiplex-Digitalsignalen in beliebiger Reihenfolge in an beliebigen Anschlüssen der zweiten Art Anschlüsse ausgehenden Zeitmultiplex-Digitalsignalen durchschaltbar sind und umgekehrt,
- die Multiplexer/Demultiplexer (309) zwischen der ersten Art Anschlüsse und dem Zwischenspeicher (303) angeordnet sind,
- er eine Recheneinheit (µP0) aufweist, die mit dem Zwischenspeicher (303) und einer Steuereinheit (320) des Nachrichtenübertragungssystems verbunden ist,
- die Recheneinheit (µP0) von der Steuereinheit (320) Informationen empfängt, wie die Kanäle von dem Zwischenspeicher (303) durchzuschalten sind, und
- die Recheneinheit aufgrund dieser Informationen den Zwischenspeicher (303) so steuert, daß er die Kanäle entspechend der Informationen durchschaltet.

2. Teilnehmeranschlußknoten nach Anspruch 1, dadurch gekennzeichnet,
- daß die Zwischenspeicher (304, 305) aus einem für die übertragung in der einen Richtung verwendeten ersten Zwischenspeicher (304) und einem für die übertragung in der anderen Richtung verwendeten zweiten Zwischenspeicher (305) bestehen, die jeweils mehrere matrixförmig in Zeilen und Spalten angeordnete Teilspeicher (11, 21, 31, 41, ..., 12, 13, 14, ...) enthalten, von denen jeder eine Anzahl von adressierbaren Speicherplätzen enthält, und
- daß die Teilspeicher (11, 21, 31, 41, ) einer Zeile Eingänge haben, die parallel an einem Eingang (E1, ..., E24) des Zwischenspeichers angeschlossen sind, und die Teilspeicher (11, 12, 13, 14, ...) einer Spalte Ausgänge haben, die parallel an einem Ausgang (A1, ..., A24) des Zwischenspeichers oder umgekehrt angeschlossen sind.

3. Teilnehmeranschlußknoten nach Anspruch 2, dadurch gekennzeichnet, daß dem Zwischenspeicher (304, 305) weitere Teilspeicher (10, 20, 30, 40, ...; 251, 252, 253, ...) mit adressierbaren Speicherplätzen zur Präambelbildung und zum Auslesen der Präambeln zugeordnet sind.

4. Teilnehmeranschlußknoten nach Anspruch 2, dadurch gekennzeichnet, daß die Anzahl der adressierbaren Speicherplätze eines Teilspeichers (11, 21, 31, 41, ...; 10, 20, 30, 40, ...) gleich der Anzahl der Zeitschlitze des Rahmens der zu übertragenden Zeitmultiplex-Digitalsignale ist und die Größe eines Speicherplatzes dem Dateninhalt eines Zeitschlitzes entspricht.

5. Teilnehmeranschlußknoten nach Anspruch 4, dadurch gekennzeichnet, daß das Einschreiben des Inhalts eines Zeitschlitzes in einen der Speicherplätze eines Teilspeichers durch ein Zählwerk (307) und das Auslesen durch einen mit dem Zählwerk (307) verbundenen Tabellenspeicher (308) gesteuert wird.

6. Teilnehmeranschlußknoten nach Anspruch 5, dadurch gekennzeichnet, daß der Tabellenspeicher (308) der Speicher (308) eines Mikroprozessors (µP1, µP2) ist.

## Claims

1. Subscriber line node of a digital communications system for bidirectional transmission of time-division multiplex digital signals between first equipment units, in particular exchanges, and second equipment units, in particular front-end equipment,
- in which first types of connections form a first bidirectional interface for time-division multiplex digital signals of a predetermined transmission bit rate,
- in which second types of connections form a second bidirectional interface for time-division multiplex digital signals of a predetermined transmission bit rate,
- in which the multiplexers/demultiplexers are arranged,
**characterised in that**
- it has a buffer memory (303), with which channels of time-division multiplex digital signals arriving at any connections of the first type can be switched through in any order to time-division multiplex digital signals outgoing at any connections of the second type, and vice versa,
- the multiplexers/demultiplexers (309) are arranged between the first types of connections and the buffer memory (303),
- it has an arithmetic unit (µPO), which is connected to the buffer memory (303) and a control unit (320) of the communication system,
- the arithmetic unit (µPO) receives information from the control unit (320) as to how the channels are to be through-connected by the buffer memory (303), and
- on the basis of this information, the arithmetic unit controls the buffer memory (303) so that it switches through the channels according to the information.

2. Subscriber line node according to Claim 1,
**characterised in that**
- the buffer memories (304, 305) consist of a first buffer memory (304) used for transmission in one direction and a second buffer memory (305) used for transmission in the other direction, each containing several partial memories (11, 21, 31, 41, ..., 12, 13, 14, ...) arranged in lines and columns in the form of a matrix, each of which contains a number of addressable memory locations, and that
- the partial memories (11, 21, 31, 41 ...) have a line of inputs which are connected in parallel to one input (E1, ..., E24) of the buffer memory, and the partial memories (11, 12, 13, 14, ...) have a column of outputs which are connected in parallel to one output (A1, ..., A24) of the buffer memory, or vice versa.

3. Subscriber line node according to Claim 2,
**characterized in that** further partial memories (10, 20, 30, 40, ...; 251, 252, 253, ...) having addressable memory locations for preamble generation and for reading out the preambles, are allocated to the buffer memory (304, 305).

4. Subscriber line node according to Claim 2,
**characterised in that** the number of addressable memory locations of a partial memory (11, 21, 31, 41, ...; 10, 20, 30, 40, ...) is equal to the number of time slots of the frame of the time-division multiplex digital signals to be transmitted and the size of a memory location corresponds to the data content of a time slot.

5. Subscriber line node according to Claim 4,
**characterised in that** the writing of the contents of a time slot into one of the memory locations of a partial memory is controlled by a counter (307), and the readout is controlled by a table memory (308) connected to the counter (307).

6. Subscriber line node according to Claim 5,
**characterised in that** the table memory (308) of the memory (308) is a microprocessor (µP1, µP2).

## Revendications

1. Noeud de raccordement d'abonné d'un système numérique de transmission d'informations destiné à la transmission bidirectionnelle de signaux numériques de multiplexage temporel entre des premiers équipements, en particulier des centraux téléphoniques, et des deuxièmes équipements, en particulier des équipements de champs préliminaires,
- dans lequel des raccordements d'un premier type forment une première interface bidirectionnelle pour des signaux numériques de multiplexage temporel d'un débit binaire de transmission prédéterminé,
- dans lequel des raccordements d'un deuxième type forment une deuxième interface bidirectionnelle pour des signaux numériques de multiplexage temporel d'un débit binaire de transmission prédéterminé,
- dans lequel sont disposés des multiplexeur/démultiplexeur,
caractérisé en ce que
- il présente une mémoire temporaire (303) avec laquelle des voies de signaux numériques de multiplexage temporel entrant à des raccordements quelconques du premier type peuvent être commutées dans un ordre quelconque en des signaux numériques de multiplexage temporel sortant à des raccordements quelconques du deuxième type et inversement,
- les multiplexeur/démultiplexeur (309) sont disposés entre les raccordements du premier type et la mémoire temporaire (303),
- il présente une unité de calcul (µP0) reliée à la mémoire temporaire (303) et une unité de commande (320) du système de transmission d'informations,
- l'unité de calcul (µP0) de l'unité de commande (320) reçoit des informations sur la manière dont les voies de la mémoire temporaire (303) doivent être commutées. et
- l'unité de calcul commande la mémoire temporaire (303) sur la base de ces informations, de manière à commuter les voies en fonction de ces informations.

2. Noeud de raccordement d'abonné suivant la revendication 1, caractérisé en ce que
- les mémoires temporaires (304, 305) sont constituées par une première mémoire temporaire (304) utilisée pour la transmission dans un sens, et une deuxième mémoire temporaire (305) utilisée pour la transmission dans l'autre sens, comportant chacune plusieurs mémoires partielles (11, 21, 31, 41, ..., 12, 13, 14, ...) disposées sous forme de matrice en lignes et colonnes, chacune desdites mémoires partielles comportant un certain nombre d'emplacements de mémoire adressables, et
- les mémoires partielles (11, 21, 31, 41, ...) d'une ligne comportent des entrées qui sont raccordées en parallèle à une entrée (E1, ..., E24) de la mémoire temporaire, et les mémoires partielles (11, 12, 13, 14, ...) d'une colonne comportent des sorties qui sont reliées en parallèle à une sortie (A1, ..., A24) de la mémoire temporaire, ou inversement.

3. Noeud de raccordement d'abonné suivant la revendication 2, caractérisé en ce qu'à la mémoire temporaire (304, 305) sont associées d'autres mémoires partielles (10, 20, 30, 40 ...; 251, 252, 253, ...) comportant des emplacements de mémoire adressables pour former des préambules et pour lire les préambules.

4. Noeud de raccordement d'abonne suivant la revendication 2, caractérisé en ce que le nombre d'emplacements adressables d'une mémoire partielle (11, 21, 31, 41, ...; 10, 20, 30. 40, ...) est identique au nombre des créneaux temporels de la trame des signaux numériques de multiplexage temporel à transmettre, et en ce que la grandeur d'un emplacement de mémoire correspond au contenu de données d'un créneau temporel.

5. Noeud de raccordement d'abonné suivant la revendication 4, caractérisé en ce que l'écriture du contenu d'un créneau temporel dans l'un des emplacements de mémoire d'une mémoire partielle est commandée par un compteur (307), et la lecture est commandée par une mémoire en tableau (308) reliée au compteur (307).

6. Noeud de raccordement d'abonné suivant la revendication 5, caractérisé en ce que la mémoire en tableau (308) est la mémoire (308) d'un microprocesseur (µP1, µP2).
